# FASCICULE DE BREVET EUROPEEN

(11) **EP 3 803 055 B1**
(45) Date de publication et mention de la délivrance du brevet: **12.04.2023**
(21) Numéro de dépôt: 19725364.4
(22) Date de dépôt: 23.05.2019
(51) Int. Cl.: F01D 5/14, F04D 29/32, F04D 29/54, F04D 29/68

(54) **VIROLE A PROFILAGE ÉVOLUTIF POUR COMPRESSEUR DE TURBOMACHINE**
PROFILIERTES DECKBAND FÜR EINEN VERDICHTER EINER STRÖMUNGSMASCHINE
CONTOURED SHROUD FOR A COMPRESSOR OF A TURBOMACHINE

(30) Priorité: 31.05.2018 BE 201805361
(43) Date de publication de la demande: 14.04.2021
(73) Titulaire: Safran Aero Boosters SA, 4041 Herstal (BE)
(72) Inventeur: HIERNAUX, Stéphane, 4041 Herstal (BE)
(74) Mandataire: Lecomte & Partners
(86) Numéro de dépôt international: PCT/EP2019/063300
(87) Numéro de publication internationale: WO 2019/228897

(56) Documents cités:
- EP-A1- 2 730 745
- FR-A1- 3 034 820
- US-A1- 2010 232 954
- US-A1- 2014 037 453
- US-A1- 2016 017 796

## Description

### Domaine technique

L'invention concerne un profil non axisymétrique de paroi annulaire de turbomachine. Plus précisément l'invention concerne une surface annulaire supportant des aubes entre lesquelles sont disposés des bosses et des creux. L'invention a également trait à une turbomachine axiale, notamment un turboréacteur d'avion ou un turbopropulseur d'aéronef.

### Technique antérieure

L'écoulement d'un flux annulaire au travers d'un compresseur présente des décollements en coin d'aube. Ces décollements génèrent des tourbillons en face extrados des aubes et réduisent le flux maximal pouvant traverser les passages inter-aubes. Ils peuvent provoquer des phénomènes de décrochage et de pompage qui réduisent la zone de stabilité du compresseur.

Le document FR3011888 A1 divulgue une pièce de turbomachine comprenant au moins des première et deuxième pales, et une plateforme à partir de laquelle s'étendent les pales. La plateforme présente une surface non-axisymétrique limitée par un premier et un deuxième plan extrémal, et définie par au moins deux courbes de construction de classe C1 représentant chacune la valeur d'un rayon de ladite surface en fonction d'une position entre l'intrados de la première pale et l'extrados de la deuxième pale selon un plan sensiblement parallèle aux plans extrémaux, dont une première courbe croissante au voisinage de la deuxième pale ; une deuxième courbe disposée entre la première courbe et un bord de fuite des première et deuxième pales, et décroissante au voisinage de la deuxième pale. Or, le rendement de la turbomachine reste limité.

Le document FR3034820 A1 divulgue une autre pièce de turbomachine selon l'art antérieur.

### Résumé de l'invention

### Problème technique

L'invention a pour objectif de résoudre au moins un des problèmes posés par l'art antérieur. Plus précisément, l'invention a pour objectif d'améliorer le rendement d'une turbomachine. L'invention a également pour objectif d'augmenter le débit au travers d'un compresseur. L'invention a également pour objectif de proposer une solution simple, résistante, légère, économique, fiable, facile à produire, commode d'entretien, et d'inspection aisée.

### Solution technique

L'invention a pour objet un compresseur de turbomachine axiale selon la revendication 1, notamment un compresseur basse-pression, le compresseur comprenant une surface annulaire et au moins une rangée d'aubes s'étendant radialement depuis ladite surface annulaire et décalées d'un pas inter-aubes, la surface annulaire comprenant : une rangée arquée de bosses décalées du pas inter-aubes et chacune avec une hauteur maximale ; et/ou une rangée arquée de creux décalés du pas inter-aubes et chacun avec une profondeur maximale ; deux bosses successives de la rangée arquée de bosses comprennent deux hauteurs maximales différentes, et/ou deux creux successifs de la rangée arquée de creux comprennent deux profondeurs maximales différentes.

Les hauteurs maximales et/ou les profondeurs maximales varient progressivement selon la circonférence de la surface annulaire, depuis un maximum jusqu'à un minimum. Ceux-ci sont donc un maximum et un minimum absolus pour la rangée de bosses ou de creux. Préférentiellement les hauteurs maximales et/ou les profondeurs maximales sont fonction de la position angulaire autour de l'axe de rotation du compresseur.

Selon des modes avantageux de l'invention, le compresseur peut comprendre une ou plusieurs des caractéristiques suivantes, prises isolément ou selon toutes les combinaisons techniques possibles :
- Les deux bosses successives comprennent deux longueurs axiales différentes et/ou deux largeurs différentes ; les largeurs étant mesurées selon la circonférence.
- Les deux bosses successives comprennent deux volumes différents ; les volumes étant mesurés par rapport à une surface axisymétrique théorique épousant la surface annulaire.
- La rangée arquée de bosses comprend une bosse centrale dont la hauteur maximale est la plus importante, sous-entendu par rapport aux autres bosses de la rangée.
- La rangée arquée de bosses comprend deux bosses diamétralement opposées dont les hauteurs sont respectivement la plus grande et la plus petite de la rangée annulaire correspondante.
- Les deux creux successifs et les deux bosses successives forment deux couples bosse/creux, chaque couple présentant une amplitude A radiale mesurée entre le fond du creux et le sommet de la bosse, les deux couples présentant des amplitudes radiales différentes.
- La rangée arquée de creux et/ou la rangée arquée de bosses s'étend sur au plus un tiers du tour de la surface annulaire.
- La surface annulaire comprend une zone angulaire libre de bosses et/ou libre de creux entre les aubes.
- La surface annulaire comprend en outre une troisième rangée annulaire de troisièmes aspérités identiques, la troisième rangée annulaire chevauchant circonférentiellement la rangée arquée de bosses et/ou la rangée arquée de creux.
- Les positions axiales des bosses de la rangée arquée de bosses et/ou les positions axiales des creux de la rangée arquée de creux varient progressivement le long de la rangée correspondante.
- Lesdites deux bosses successives de la rangée arquée de bosses sont décalées axialement l'une par rapport à l'autre.
- La rangée d'aubes est une rangée annulaire, et/ou coaxiale avec la rangée de bosses et/ou la rangée de creux.
- Les bosses de la rangée de bosses sont axialement au même niveau et/ou se chevauchent axialement.
- Les creux de la rangée de creux sont axialement au même niveau et/ou se chevauchent axialement.
- Les hauteurs maximales et/ou les profondeurs maximales sont mesurées radialement par rapport à la surface axisymétrique théorique.
- La rangée arquée de bosses comprend une bosse la plus haute disposée au milieu de ladite rangée arquée.
- La rangée arquée de creux comprend deux creux diamétralement opposées dont les profondeurs sont respectivement la plus grande et la plus petite de la rangée correspondante.
- Les deux creux successifs comprennent deux volumes différents, et/ou deux longueurs axiales différentes et/ou deux largeurs différentes
- La rangée arquée de creux comprend un creux central dont la profondeur maximale est la plus importante.
- Chaque rangée arquée peut comprendre au moins cinq ou au moins dix, bosses ou creux, respectivement.
- Les deux hauteurs maximales différentes des deux bosses successives varient d'au moins : 1%, ou 2%, ou 5%, ou 10% l'une par rapport à l'autre.
- Les deux profondeurs maximales différentes des deux creux successifs varient d'au moins : 1%, ou 2%, ou 5%, ou 10% l'une par rapport à l'autre.
- Les deux bosses successives comprennent deux aires différentes.
- La rangée d'aspérité, de bosses ou de creux, présente une symétrie par rapport à la bosse centrale, respectivement au creux central.

L'invention a pour objet une virole de compresseur selon la revendication 11, la virole comprenant : une rangée de zones de réception d'aube décalées d'un pas inter-aubes ; une rangée arquée de bosses décalées du pas inter-aubes et chacune avec une hauteur maximale ; et/ou une rangée arquée de creux décalés du pas inter-aubes et chacun avec une profondeur maximale ; deux bosses successives de la rangée arquée de bosses présentent deux hauteurs différentes, et/ou deux creux successifs de la rangée arquée de creux présentent deux profondeurs différentes, la virole formant la surface annulaire du compresseur selon l'invention.

Selon des modes avantageux de l'invention, la virole peut comprendre une ou plusieurs des caractéristiques suivantes, prises isolément ou selon toutes les combinaisons techniques possibles :
- Les zones de réception d'aubes sont des ouvertures ou des moignons.
- La virole comprend une coquille d'épaisseur constante et formant la bosse et/ou le creux.
- Radialement à l'opposé des creux et/ou des bosses, la virole comprend une couche de matériau abradable s'étendant axialement le long des creux et/ou des bosses.
- La virole comprend un matériau composite à matrice organique et à fibres.
- La virole est radialement interne ou radialement externe.

L'invention a également pour objet une turbomachine, notamment un turboréacteur d'aéronef apte à fonctionner avec une accélération verticale négative, comprenant un compresseur et/ou une virole, remarquable en ce que le compresseur est conforme à l'invention, et/ou la virole est conforme à l'invention.

Selon un mode avantageux de l'invention, la turbomachine comprend un support de montage, la rangée arquée de bosses et/ou la rangée arquée de creux étant angulairement du côté du support et montage, la surface annulaire comprenant notamment une moitié angulaire libre de bosse et de creux entre les aubes qui est diamétralement à l'opposé du support de montage.

Selon un mode avantageux de l'invention, la turbomachine comprend une lèvre avec un bord amont circulaire disposé selon un plan incliné par rapport à l'axe de rotation de la turbomachine.

Selon un mode avantageux de l'invention, dans le sens normal de montage, la rangée annulaire de bosses et/ou la rangée annulaire de creux est disposée en moitié inférieure de la surface annulaire.

### Avantages apportés

De manière générale, l'invention propose un profilage de surface annulaire où les amplitudes d'aspérités varient d'un passage inter-aubes à l'autre.

Ainsi, l'invention permet de répondre à la configuration où le compresseur travaille en présence d'obstacle ou d'hétérogénéité perturbant le flux entrant sur une portion arquée. Un tel cas peut se produire lorsque la turbomachine est proche d'une aile, ou qu'elle y est enterrée. Par ailleurs, l'invention apporte une réponse aux vents latéraux, comme aux formes penchées des lèvres de nacelles. L'invention permet d'accentuer l'effet du profilage sur une partie angulaire de la surface annulaire, et de le réduire là où les perturbations restent plus discrètes. En interrompant localement la rangée d'aspérités, la forme nominale de la veine est mieux respectée, ce qui préserve le rendement, le débit, et facilite la conception des parties en aval.

### Brève description des dessins

La figure 1 représente une turbomachine axiale selon l'invention.
La figure 2 est un schéma d'un compresseur de turbomachine selon l'invention.
La figure 3 illustre une rangée d'aubes sur son support selon l'invention.
La figure 4 est une coupe de la rangée d'aubes et de la surface annulaire le long de l'axe IV-IV tracé sur la figure 3.
La figure 5 est une coupe de la rangée d'aubes et du profilage inter-aubes le long de l'axe V-V tracé sur la figure 3.
La figure 6 illustre les tailles des aspérités autour de la surface annulaire selon l'invention.
La figure 7 illustre les tailles des aspérités autour d'une deuxième surface annulaire de la turbomachine selon l'invention.
La figure 8 illustre les tailles des aspérités autour d'une troisième surface annulaire de la turbomachine selon l'invention.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

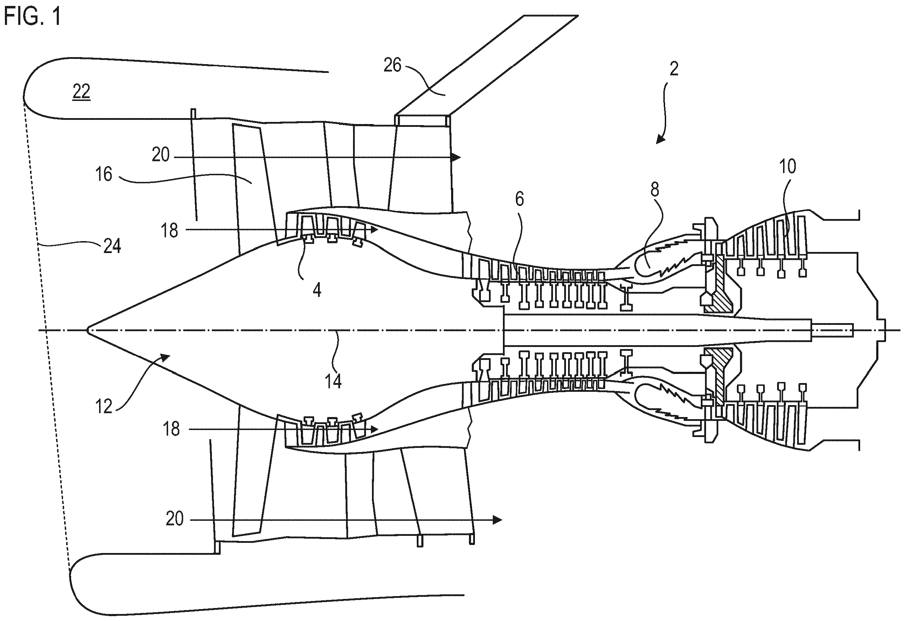

La figure 1 représente de manière simplifiée une turbomachine axiale. Il s'agit dans ce cas précis d'un turboréacteur double-flux.

Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via les arbres jusqu'au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8. Un ventilateur d'entrée communément désigné fan ou soufflante 16 est couplé au rotor 12 et génère un flux d'air qui se divise en un flux primaire 18 traversant les différents niveaux susmentionnés de la turbomachine, et en un flux secondaire 20 traversant un conduit annulaire (partiellement représenté) le long de la machine pour ensuite rejoindre le flux primaire en sortie de turbine. Le flux secondaire peut être accéléré de sorte à générer une réaction de poussée nécessaire au vol d'un avion.

Le flux secondaire 20 est délimité par une nacelle 22 qui entoure en outre la soufflante 16. L'entrée 24 de la turbomachine 2 peut être formée par la nacelle 22, notamment par sa lèvre amont. L'entrée 24 peut être généralement plane. Elle peut être sensiblement inclinée par rapport à un plan perpendiculaire à l'axe de rotation 14. La liaison de la turbomachine peut être assurée par un support de montage 26. Ce dernier peut être relié à une surface portante d'un aéronef, par exemple à une aile d'avion.

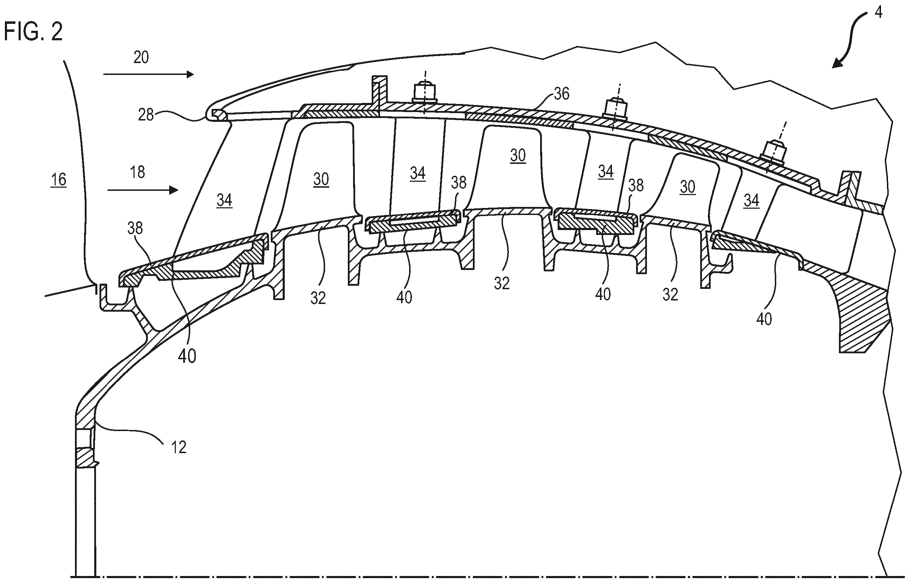

La figure 2 est une vue en coupe d'un compresseur d'une turbomachine axiale telle que celle de la figure 1. Le compresseur peut être un compresseur basse-pression 4. On peut y observer une partie de la soufflante 16 et le bec de séparation 28 du flux primaire 18 et du flux secondaire 20. Le rotor 12 comprend plusieurs rangées annulaires d'aubes rotoriques 30, en l'occurrence trois. Les aubes rotoriques 30 peuvent s'étendre depuis une surface annulaire de plateforme annulaire 32.

Le compresseur basse-pression 4 comprend plusieurs redresseurs, en l'occurrence quatre, qui contiennent chacun une rangée d'aubes statoriques 34. Certaines aubes statoriques peuvent être à orientation réglable et pilotée, également appelé aubes à calage variable.

Les aubes statoriques 34 s'étendent essentiellement radialement depuis un carter extérieur 36, également appelé virole externe. Au sein d'une même rangée, les aubes statoriques 34 sont régulièrement espacées les unes des autres selon un pas inter-aubes.

Les rangées annulaires d'aubes statoriques 34 peuvent recevoir des viroles internes 38. Ces dernières peuvent délimiter le flux primaire 18 grâce à leurs surfaces annulaires. Les viroles internes 38 peuvent coopérer de manière étanche avec le rotor, et/ou recevoir des couches annulaires 40 de matériau abradable à cet effet.

Les aubes 34 peuvent être reliées aux viroles 38 par soudure sur un moignon conformé avec la virole associée. Localement, certaines aubes 34 peuvent être reçues dans des ouvertures traversant la coquille formant la virole 38. Par exemple, une virole 38 forme un réceptacle ou une contre forme recevant la couche d'abradable 40 qui y est moulé ou projeté.

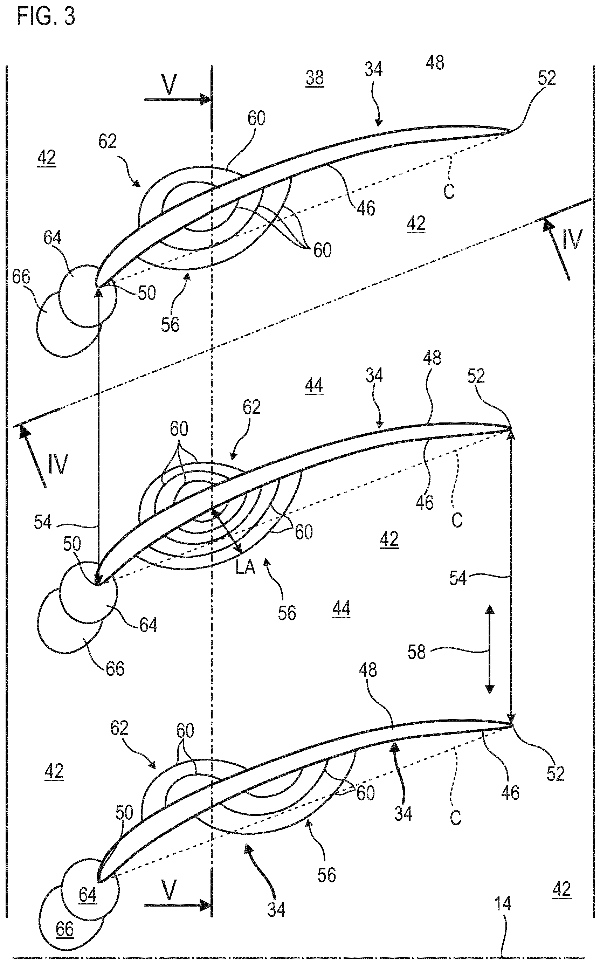

La figure 3 esquisse une partie de rangée annulaire d'aubes. Les aubes peuvent correspondre aux aubes statoriques 34 présentées en relation avec la figure 2. Une virole, par exemple une virole interne 38, relie les aubes 34. La virole interne peut être segmentée, c'est-à-dire divisée selon la circonférence. La surface annulaire 42 de la virole interne reçoit les aubes 34. Chaque aube 34 est représentée via l'un de ses profils aérodynamiques, éventuellement au niveau radialement de la surface annulaire 42.

Les aubes 34 définissent entre elles des passages 44, également appelés passages inter-aubes. Les aubes présentent des surfaces intrados 46 et des surfaces extrados 48 qui séparent les passages 44. Les surfaces intrados 46 et les surfaces extrados 48 s'étendent des bords d'attaque 50 aux bords de fuite 52. Ces bords (50 ; 52) peuvent permettre de définir les pas inter-aubes 54.

La surface annulaire 42 comprend plusieurs aspérités ou motifs, notamment plusieurs rangées d'aspérités ou motifs. Certaines rangées peuvent se chevaucher axialement, d'autres peuvent être écartées axialement. Les aspérités peuvent former des paires, par exemple associée à une même aube, et/ou à un même bord d'attaque.

Les aspérités peuvent comprendre des aspérités principales, ou premières aspérités, dont une rangée arquée de bosses 56, notamment une rangée principale, par exemple à l'intérieur des passages 44. Les bosses 56 peuvent former un alignement, notamment selon la circonférence 58. Elles peuvent être alignées axialement, et/ou se chevaucher axialement. Les bosses 56 de la rangée peuvent être de formes similaires, toutefois leurs hauteurs maximales, leurs largeurs LA, leurs longueurs, leurs surfaces et/ou leurs volumes peuvent varier sensiblement d'un passage 42 au passage suivant, c'est-à-dire d'une face à l'autre d'une aube 34. L'importance de variation de bosses 56 peut être appréciée grâce aux lignes de niveau 60 qui témoignent de la différence de hauteur radiale par rapport à la surface annulaire, notamment par rapport à une surface axisymétrique de référence et/ou moyennée.

De même, les premières aspérités peuvent comprendre une rangée arquée de creux 62, notamment une rangée principale, par exemple à l'intérieur des passages 44. Les creux 62 peuvent former un alignement, notamment selon la circonférence 58. Ils peuvent être alignées axialement, et/ou se chevaucher axialement. Les creux 62 de la rangée arquée peuvent être de formes similaires, toutefois leurs profondeurs maximales, leurs largeurs, leurs longueurs, leurs surfaces et/ou leurs volumes peuvent varier sensiblement d'un passage 42 au passage 42 voisin, c'est-à-dire d'une face à l'autre d'une même aube 34. Les lignes de niveau 60 permettent d'appréhender la manière dont les creux s'enfoncent dans la surface annulaire suivant leur emplacement dans leur rangée.

Ainsi, la surface annulaire 38 est non axisymétrique, et évolue autour de l'axe de rotation 14, c'est-à-dire le long des rangées arquées d'aspérités.

Une même aspérité peut s'étendre en amont des bords d'attaque 50 jusqu'à 20% de la longueur des cordes C des aubes 34, et/ou s'étendre en aval des bords de fuite 52 jusqu'à 20% de la longueur d'une corde C. Chaque bosse et/ou chaque creux peut s'étendre axialement sur au moins 10% de la longueur d'une corde C, et/ou circonférentiellement sur au moins 5% ou 10% du pas inter-aubes 54.

Les bosses 56 de la rangée arquée peuvent être disposées sur un même plan transversal à l'axe de rotation 14, d'où leur caractère aligné, ou coplanaire dans l'espace. La même caractéristique peut s'appliquer aux creux 62.

Les aspérités peuvent également comprendre des aspérités auxiliaires, ou troisièmes aspérités. Ces troisièmes aspérités peuvent comprendre des bosses auxiliaires 64 et/ou des creux auxiliaires 66. Les bosses auxiliaires 64 peuvent être placées contre et/ou autour d'un bord d'attaque 50. Les creux auxiliaires 66 peuvent être placés en amont et/ou axialement à distance des bords d'attaque 50, par exemple au contact des bosses auxiliaires 64. Les bosses auxiliaires 64 peuvent former une rangée auxiliaire de bosses axialement et/ou circonférentiellement à distance de la rangée principale de bosses. Cet aspect peut être transposé aux creux auxiliaires 66 par rapport creux principaux 62. Bien que seulement trois aubes statoriques 34 soient représentées, le présent enseignement peut s'appliquer à toute la rangée correspondante. De même, cet enseignement s'applique à toute la/les rangée(s) de bosses et à toute la/les rangée(s) de creux.

Le présent enseignement peut également s'appliquer au rotor, par exemple les aubes rotoriques présentées en relation avec la figure 2. Optionnellement, la surface annulaire peut être celle d'une plateforme annulaire du rotor.

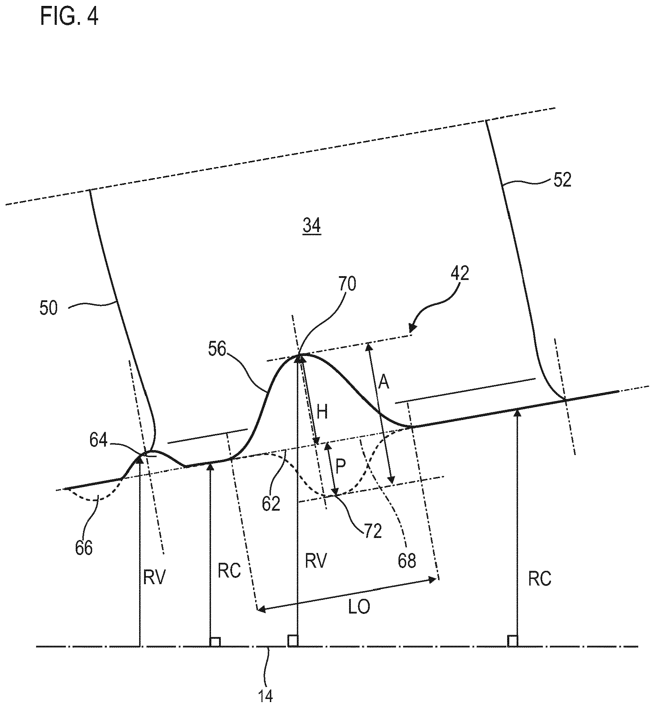

La figure 4 est une coupe de la figure 3 suivant l'axe IV-IV. Elle illustre l'évolution axiale du rayon de la surface axisymétrique 68 épousant la surface annulaire 42. Une aube 34 est visible avec son bord d'attaque 50 et son bord de fuite 52. La longueur Lo axiale de la bosse 56 est représentée. Celle du creux 62 peut être mesurée de manière similaire.

Au niveau des aspérités principales et en un point donné de l'axe de rotation 14, la surface annulaire 42 présente un rayon variable RV imposé par la bosse 56 et le creux 62. Ici, la surface annulaire 42 s'écarte radialement de la surface axisymétrique 68 servant de niveau de référence. En amont et en aval du creux 62 et de la bosse 56, la surface annulaire 42 peut être décrite par un rayon constant RC autour de l'axe de rotation 14. Au niveau de la bosse auxiliaire 64, ou deuxième bosse, et/ou du creux auxiliaire 66, ou deuxième creux, la surface annulaire 42 comprend un rayon variable RV.

Concernant les premières aspérités, la bosse principale 56 peut comprendre un sommet 70. Le sommet 70 peut définir la hauteur maximale H de la bosse 56 principale. Le creux principal 62 peut comprendre un fond 72 contre lequel est mesuré sa profondeur maximale P.

Une amplitude maximale A peut être mesurée en additionnant la profondeur maximale P et la hauteur maximale H. Préférentiellement, une même amplitude maximale A est associée à une même aube 34. Alternativement, l'amplitude maximale est associée à un même passage inter-aubes.

Lorsque la surface axisymétrique 68 présente un profil incliné par rapport à l'axe de rotation 14, la profondeur maximale P et/ou la hauteur maximale H, et/ou l'amplitude maximale A, peuvent être mesurées perpendiculairement à surface axisymétrique 68.

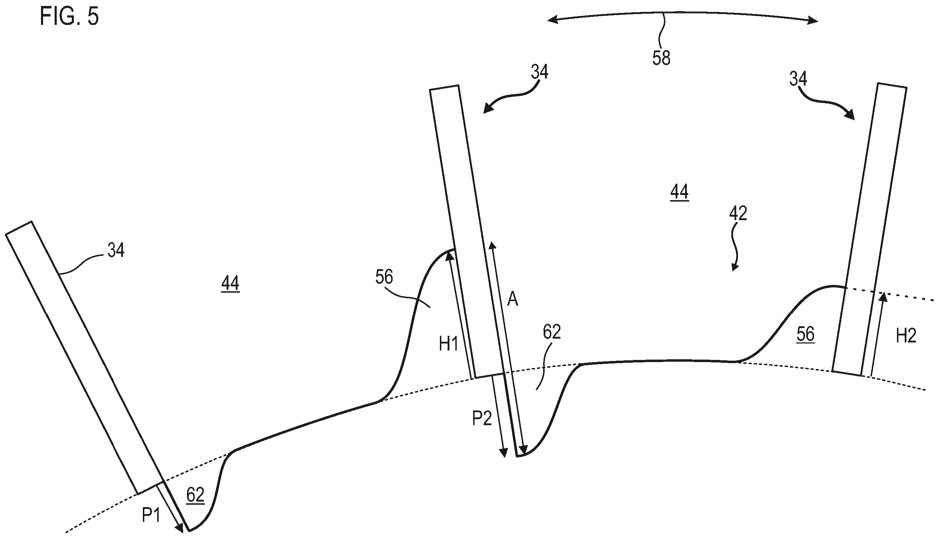

La figure 5 est une coupe de la rangée d'aubes 34 selon l'axe V-V tracé en figure 3. Deux passages 44 successifs et trois aubes 34 successives sont représentés. La coupe traverse les bosses principales 56 et les creux principaux 62.

A droite, la surface annulaire 42 présente des aspérités plus grandes, et donc des variations radiales supérieures, que dans le passage de gauche. A droite, la bosse 56 présente une hauteur maximale H2 supérieure à la hauteur maximale H1 du passage 44 de gauche. De manière similaire, le creux 62 de droite présente une profondeur maximale P2 supérieure à la profondeur maximale P1 du creux de gauche 62. Les amplitudes A radiales des aspérités principales peuvent varier autour de la surface annulaire 42. La taille des aspérités principales peut varier suivant la circonférence 58, et/ou le long de la rangée arquée correspondante.

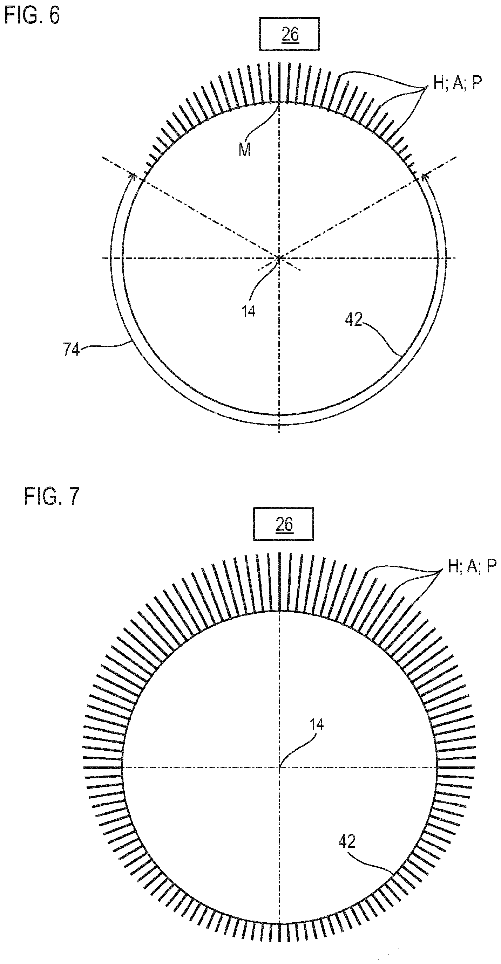

La figure 6 illustre une surface annulaire 42 et des segments s'étendant radialement. La surface annulaire 42 peut être représentée dans son sens normal de montage.

La taille des segments est représentative des grandeurs des aspérités principales. La taille des segments est proportionnelle aux hauteurs maximales H des bosses, et/ou des profondeurs maximales P des creux, et/ou des amplitudes maximales A, en fonction de la position angulaire des aspérités autour de l'axe de rotation 14.

Par exemple, la rangée arquée de bosses présente une bosse centrale dont la hauteur maximale H est la plus importante. Cette bosse centrale peut être au milieu M de sa rangée. Les hauteurs maximales H des bosses diminuent progressivement, par exemple d'un décrément constant, vers les extrémités de la rangée arquée. Eventuellement, la hauteur maximale H maximale devient nulle aux extrémités circonférentielles de ladite rangée si bien que les bosses disparaissent. Ces propriétés peuvent être transposées à la rangée arquée de creux qui présente alors un creux central avec une profondeur principale maximale au milieu M de la rangée.

Par exemple, la ou chaque rangée arquée s'étend sur un tiers de tour de la surface annulaire 42. Eventuellement, la ou chaque rangée arquée est centrée angulairement par rapport au support de montage 26.

Optionnellement, la surface annulaire 42 présente une zone angulaire 74 libre d'aspérités. Cette zone angulaire 74, notamment de forme arquée, peut s'étendre sur un demi-tour, ou deux tiers de tour. La zone angulaire 74 peut rejoindre les extrémités de la ou des rangées arquée de bosses et/ou de creux. Alternativement, la surface annulaire peut inclure une deuxième rangée d'aspérités, qui se commence notamment là une deuxième rangée d'aspérités s'arrête. Alternativement, la deuxième rangée peut décrire une boucle. Eventuellement, ses aspérités sont identiques sur le tour de la surface annulaire. Ainsi, lorsque ce support de montage est une aile pouvant créer les perturbations dans la turbomachine, il devient possible de créer localement des aspérités corrigeant localement les perturbations. Cet agencement trouve également un intérêt dans le cas d'une turbomachine enterrée dans une aile d'aéronef, dont les surfaces de sustentation et le bord d'attaque influencent l'écoulement.

La figure 7 représente une autre surface annulaire 42 de la turbomachine et des segments s'étendant radialement autour de la surface. La surface annulaire 42 peut être représentée dans son sens normal de montage. Le support de montage 26 peut être au-dessus de la surface annulaire.

La taille des segments est représentative des grandeurs des aspérités principales. La taille des segments est proportionnelle aux hauteurs maximales H des bosses, et/ou des profondeurs maximales P des creux, et/ou des amplitudes maximales A, en fonction de la position angulaire des aspérités autour de l'axe de rotation 14.

Dans le présent cas, la rangée arquée de bosses est répartie sur tout le tour de la surface annulaire 42. La rangée forme une boucle fermée. Les hauteurs maximales H varient entre une borne supérieure et une borne inférieure qui sont diamétralement opposée par rapport à l'axe de rotation 14.

Les présentes caractéristiques peuvent être transposée à une rangée arquée de creux de profondeurs maximales P, et/ou aux amplitudes maximales A.

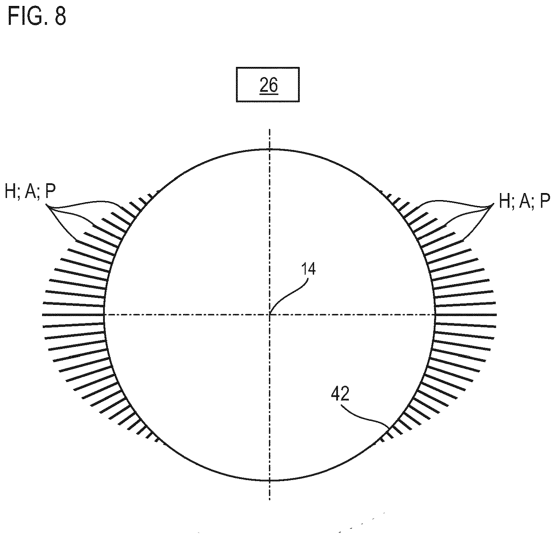

La figure 8 illustre les tailles des aspérités autour d'une troisième surface annulaire 42 de la turbomachine. Le support de montage 26 peut être au-dessus de la surface annulaire. Les tailles des aspérités sont illustrées grâce à des segments de longueurs variables.

La taille des segments est représentative des grandeurs des aspérités principales. La taille des segments est proportionnelle aux hauteurs maximales H des bosses, et/ou des profondeurs maximales P des creux, et/ou des amplitudes maximales A, en fonction de la position angulaire des aspérités autour de l'axe de rotation 14.

Deux rangées arquées d'aspérités, par exemple de même type, peuvent être diamétralement opposées, et/ou symétriques par rapport à un plan passant par l'axe de rotation 14. Par exemple, deux rangées de bosses avec des profondeurs maximales P varient entre depuis un extrémum. Les deux rangées d'aspérités sont séparées et distantes l'une de l'autre. Deurs zones angulaires séparent les rangées arquées. Ces zones angulaires peuvent être supérieures au double ou quintuple du passage inter-aubes.

Les présentes caractéristiques peuvent être transposée à une rangée arquée de creux de profondeurs maximales P, et/ou aux amplitudes maximales A.

Les rangées d'aspérités reprentées en relation avec les figures 6 à 8 peuvent être combinées dans un même compresseur, et/ou une même virole. Par exemple au niveau d'une même rangée d'aubes, la virole interne peut recevoir une rangée arquée d'aspérités principales, et la virole externe peut recevoir deux autres rangées arquées d'aspérités principales, éventuellement toutes de même type. Il peut être entendu que les bosses et les creux sont de types différents.

Ou encore, trois rangées arquées d'aspérités principales peuvent être réparties axialement sur une même virole extérieure, par exemple au niveau de chaque rangée d'aubes statoriques.

## Revendications

1. Compresseur (4 ; 6) de turbomachine (2) axiale, notamment un compresseur basse-pression, le compresseur (4 ; 6) comprenant une surface annulaire (42) et au moins une rangée d'aubes (30 ; 34) s'étendant radialement depuis ladite surface annulaire (42), la surface annulaire (42) comprenant :
- une rangée arquée de bosses (56) décalées d'un pas inter-aubes (54) et chacune avec une hauteur maximale (H) ; et/ou
- une rangée arquée de creux (62) décalés du pas inter-aubes (54) et chacun avec une profondeur maximale (P) ;
deux bosses (56) successives de la rangée arquée de bosses (56) comprenant
deux hauteurs maximales (H) différentes,
et/ou
deux creux (62) successifs de la rangée arquée de creux (62) comprenant
deux profondeurs maximales (P) différentes, caractérisé et en ce que les hauteurs maximales (H) et/ou les profondeurs maximales (P) varient progressivement selon la circonférence de la surface annulaire (42), depuis un maximum jusqu'à un minimum.

2. Compresseur (4 ; 6) selon la revendication 1, **caractérisé en ce que** les deux bosses (56) successives comprennent deux longueurs (LO) axiales différentes et deux largeurs (LA) différentes.

3. Compresseur (4 ; 6) selon l'une des revendications 1 ou 2, **caractérisé en ce que** la rangée arquée de bosses (56) comprend une bosse centrale dont la hauteur maximale (H) est la plus importante.

4. Compresseur (4 ; 6) selon l'une des revendications 1 à 3, **caractérisé en ce que** la rangée arquée de bosses (56) comprend deux bosses diamétralement opposées dont les hauteurs (H) sont respectivement la plus grande et la plus petite de la rangée annulaire correspondante.

5. Compresseur (4 ; 6) selon l'une des revendications 1 à 4, **caractérisé en ce que** les deux creux (62) successifs et les deux bosses (56) successives forment deux couples bosse/creux, chaque couple présentant une amplitude A radiale mesurée entre le fond (72) du creux (62) et le sommet (70) de la bosse (56), les deux couples présentant des amplitudes (A) radiales différentes.

6. Compresseur (4 ; 6) selon l'une des revendications 1 à 5, **caractérisé en ce que** la rangée arquée de creux (62) et/ou la rangée arquée de bosses (56) s'étend sur au plus un tiers du tour de la surface annulaire (42).

7. Compresseur (4 ; 6) selon l'une des revendications 1 à 6, **caractérisé en ce que** la surface annulaire (42) comprend une zone angulaire (74) libre de bosses (56) et/ou libre de creux (62) entre les aubes (30 ; 34).

8. Compresseur (4 ; 6) selon l'une des revendications 1 à 7, **caractérisé en ce que** la surface annulaire (42) comprend en outre une troisième rangée annulaire de troisièmes aspérités identiques, la troisième rangée annulaire chevauchant circonférentiellement la rangée arquée de bosses (56) et/ou la rangée arquée de creux (62).

9. Compresseur (4 ; 6) selon l'une des revendications 1 à 8, **caractérisé en ce que** les positions axiales des bosses (56) de la rangée arquée de bosses (56) et/ou les positions axiales des creux (62) de la rangée arquée de creux (62) varient progressivement le long de la rangée arquée correspondante.

10. Compresseur (4 ; 6) selon l'une des revendications 1 à 9, **caractérisé en ce que** les hauteurs maximales (H) et/ou les profondeurs maximales (P) sont fonction de la position angulaire autour de l'axe de rotation (14) du compresseur.

11. Virole (38) de compresseur (4 ; 6), la virole (38) comprenant :
- une rangée de zones de réception d'aube (30 ; 34); **caractérisée en ce que** la virole forme la surface annulaire (42) d'un compresseur selon l'une des revendications 1 à 10.

12. Virole (38) selon la revendication 11, **caractérisée en ce que** les zones de réception d'aubes (30 ; 34) sont des ouvertures ou des moignons.

13. Virole (38) selon l'une des revendications 11 ou 12, **caractérisée en ce qu'**elle comprend une coquille d'épaisseur constante et formant la bosse (56) et/ou le creux (62).

14. Virole (38) selon l'une des revendications 11 à 13, **caractérisée en ce que** radialement à l'opposé des creux (62) et/ou des bosses (56), la virole comprend une couche de matériau abradable (40) s'étendant axialement le long des creux (62) et/ou des bosses (56).

15. Turbomachine (2), notamment un turboréacteur d'aéronef, comprenant un compresseur et/ou une virole, **caractérisée en ce que** le compresseur est conforme à l'une des revendications 1 à 10, et/ou la virole est conforme à l'une des revendications 11 à 14, et **en ce qu'**elle comprend un support de montage (26), la rangée arquée de bosses (56) et/ou la rangée arquée de creux (62) étant angulairement du côté du support et montage (26), la surface annulaire (42) comprenant une moitié angulaire libre de bosse (56) et de creux (62) entre les aubes (30 ; 34) qui est à l'opposé du support de montage (26).

## Patentansprüche

1. Verdichter (4; 6) einer axialen Turbomaschine (2), insbesondere ein Niederdruckverdichter, wobei der Verdichter (4; 6) eine ringförmige Oberfläche (42) und mindestens eine Reihe von Schaufeln (30; 34) aufweist, die sich radial von der ringförmigen Oberfläche (42) aus erstrecken, wobei die ringförmige Oberfläche (42) Folgendes umfasst:
- eine bogenförmige Reihe von Vorsprüngen (56), die in Bezug auf den Abstand zwischen den Schaufeln (54) versetzt sind und jeweils eine maximale Höhe (H ) aufweisen; und/oder
- eine bogenförmige Reihe von Vertiefungen (62), die in Bezug auf den Abstand zwischen den Schaufeln (54) versetzt sind und jeweils eine maximale Tiefe (P) aufweisen;
zwei aufeinanderfolgende Vorsprünge (56) in der bogenförmigen Reihe von Vorsprüngen (56) mit zwei unterschiedlichen maximalen Höhen (H),
und/oder
zwei aufeinanderfolgende Vertiefungen (62) in der bogenförmigen Reihe von Vertiefungen (62) mit zwei unterschiedlichen maximalen Tiefen (P),
**dadurch gekennzeichnet, dass** die maximalen Höhen (H) und/oder maximalen Tiefen (P) mit dem Umfang der ringförmigen Oberfläche (42) von einem Maximum zu einem Minimum progressiv verlaufen.

2. Verdichter (4; 6) nach Anspruch 1, **dadurch gekennzeichnet, dass** die beiden aufeinanderfolgenden Vorsprünge (56) zwei unterschiedliche axiale Längen (LO) und zwei unterschiedliche Breiten (LA) aufweisen.

3. Verdichter (4; 6) nach einem der Ansprüche 1 oder 2, **dadurch gekennzeichnet, dass** die bogenförmige Reihe von Vorsprüngen (56) einen zentralen Vorsprung umfasst, dessen maximale Höhe (H) die wichtigste ist.

4. Verdichter (4; 6) nach einem der Ansprüche 1 bis 3, **dadurch gekennzeichnet, dass** die bogenförmige Reihe von Vorsprüngen (56) zwei diametral gegenüberliegende Vorsprünge umfasst, deren Höhe (H) die größte bzw. die kleinste der entsprechenden ringförmigen Reihe ist.

5. Verdichter (4; 6) nach einem der Ansprüche 1 bis 4, **dadurch gekennzeichnet, dass** die beiden aufeinanderfolgenden Vertiefungen (62) und die beiden aufeinanderfolgenden Vorsprünge (56) zwei Vorsprung/Vertiefung-Paare bilden, wobei jedes Paar eine radiale Ausdehnung A aufweist, gemessen zwischen dem unteren Teil (72) der Vertiefung (62) und dem oberen Teil (70) des Vorsprungs (56), wobei die beiden Paare unterschiedliche radiale Ausdehnungen (A) aufweisen.

6. Verdichter (4; 6) nach einem der Ansprüche 1 bis 5, **dadurch gekennzeichnet, dass** sich die bogenförmige Reihe von Vertiefungen (62) und/oder die bogenförmige Reihe von Vorsprüngen (56) über höchstens ein Drittel des Umfangs der ringförmigen Oberfläche (42) erstreckt.

7. Verdichter (4; 6) nach einem der Ansprüche 1 bis 6, **dadurch gekennzeichnet, dass** die ringförmige Oberfläche (42) einen winkelförmigen Bereich (74) ohne Vorsprünge (56) und/oder Aussparungen (62) zwischen den Schaufeln (30; 34) aufweist.

8. Verdichter (4; 6) nach einem der Ansprüche 1 bis 7, **dadurch gekennzeichnet, dass** die ringförmige Oberfläche (42) ferner eine dritte ringförmige Reihe identischer Unebenheiten umfasst, wobei die dritte ringförmige Reihe die bogenförmige Reihe von Vorsprüngen (56) und/oder die bogenförmige Reihe von Vertiefungen (62) in Umfangsrichtung überlappt.

9. Verdichter (4; 6) nach einem der Ansprüche 1 bis 8, **dadurch gekennzeichnet, dass** die axialen Positionen der Vorsprünge (56) in der bogenförmigen Reihe von Vorsprüngen (56) und/oder die axialen Positionen der Vertiefungen (62) in der bogenförmigen Reihe von Vertiefungen (62) entlang der entsprechenden bogenförmigen Reihe progressiv verlaufen.

10. Verdichter (4; 6) nach einem der Ansprüche 1 bis 9, **dadurch gekennzeichnet, dass** die maximalen Höhen (H) und/oder die maximalen Tiefen (P) von der Winkelstellung um die Drehachse (14) des Verdichters abhängen.

11. Ein Gehäuse (38) eines Verdichters (4; 6), wobei das Gehäuse (38) Folgendes umfasst:
- eine Reihe von Klemmbereichen für die Schaufeln (30; 34);
**dadurch gekennzeichnet, dass** das Gehäuse die ringförmige Oberfläche (42) eines Verdichters nach einem der Ansprüche 1 bis 10 ausbildet.

12. Das Gehäuse (38) nach Anspruch 11, **dadurch gekennzeichnet, dass** die Klemmbereichen für die Schaufeln (30; 34) als Öffnungen oder Naben gestaltet sind.

13. Das Gehäuse (38) nach einem der Ansprüche 11 oder 12, **dadurch gekennzeichnet, dass** es aus einer Schale konstanter Dicke besteht, die den Vorsprung (56) und/oder die Vertiefung (62) bildet.

14. Ein Gehäuse (38) nach einem der Ansprüche 11 bis 13, **dadurch gekennzeichnet, dass** das Gehäuse radial gegenüber den Vertiefungen (62) und/oder Vorsprüngen (56) eine Schicht aus Schleifmaterial (40) aufweist, die sich axial entlang der Vertiefungen (62) und/oder Vorsprünge (56) erstreckt.

15. Eine Turbomaschine (2), vorzugsweise ein Flugzeug-Turbotriebwerk, mit einem Verdichter und/oder einem Gehäuse, **dadurch gekennzeichnet, dass** der Verdichter einem der Ansprüche 1 bis 10 und/oder das Gehäuse einem der Ansprüche 11 bis 14 entspricht, und dass sie einen Montageträger (26) aufweist, die bogenförmige Reihe von Vorsprüngen (56) und/oder die ringförmige Reihe von Vertiefungen (62) winkelförmig auf der Seite des Montageträgers (26) angeordnet sind, wobei die ringförmige Oberfläche (42) eine winkelförmige Hälfte ohne Vorsprünge (56) und Vertiefungen (62) zwischen den Schaufeln (30; 34) aufweist, die sich auf der dem Montageträger (26) gegenüberliegenden Seite befinden.

## Claims

1. Compressor (4; 6) for an axial turbomachine (2), in particular a low-pressure compressor, the compressor (4; 6) comprising an annular surface (42) and at least one row of blades (30; 34) extending radially from said annular surface (42), the annular surface (42) comprising:
- an arcuate row of bumps (56) spaced apart by an interblade space (54) and each having a maximum height (H); and/or
- an arcuate row of hollows (62) spaced apart by an interblade space (54) and each having a maximum depth (P);
two successive bumps (56) of the arcuate row of bumps (56) having two different maximum heights (H),
and/or
two successive hollows (62) of the arcuate row of hollows (62) having two different maximum depths (P),
**characterised in that** the maximum heights (H) and/or the maximum depths (P) vary progressively along the circumference of the annular surface (42), from a maximum to a minimum.

2. Compressor (4; 6) according to claim 1, **characterized in that** the two successive bumps (56) comprise two different axial lengths (LO) and two different widths (LA).

3. Compressor (4; 6) according to one of claims 1 or 2, **characterized in that** the arcuate row of bumps (56) includes a central bump whose maximum height (H) is the greatest.

4. Compressor (4; 6) according to one of claims 1 to 3, **characterized in that** the arcuate row of bumps (56) comprises two diametrically opposed bumps whose heights (H) are respectively the greatest and the smallest of the corresponding annular row.

5. Compressor (4; 6) according to one of claims 1 to 4, **characterised in that** the two successive hollows (62) and the two successive bumps (56) form two bump/hollow pairs, each pair having a radial amplitude (A) measured between the bottom (72) of the hollow (62) and the top (70) of the bump (56), the two pairs having different radial amplitudes (A).

6. Compressor (4; 6) according to one of claims 1 to 5, **characterized in that** the arcuate row of hollows (62) and/or the arcuate row of bumps (56) extends over not more than one third of the circumference of the annular surface (42).

7. Compressor (4; 6) according to one of claims 1 to 6, **characterized in that** the annular surface (42) comprises an angular area (74) free of bumps (56) and/or hollows (62) between the blades (30; 34).

8. Compressor (4; 6) according to one of claims 1 to 7, **characterised in that** the annular surface (42) further comprises a third annular row of identical third asperities, the third annular row circumferentially overlapping the arcuate row of bumps (56) and/or the arcuate row of hollows (62).

9. Compressor (4; 6) according to one of claims 1 to 8, **characterised in that** the axial positions of the bumps (56) of the arcuate row of bumps (56) and/or the axial positions of the hollows (62) of the arcuate row of hollows (62) vary progressively along the corresponding arcuate row.

10. Compressor (4; 6) according to one of claims 1 to 9, **characterized in that** the maximum heights (H) and/or the maximum depths (P) are dependent upon the angular position around the axis of rotation (14) of the compressor.

11. Shroud (38) for a compressor (4; 6), the shroud (38) comprising:
- a row of blade receiving areas (30; 34);
**characterised in that** the shroud forms the annular surface (42) of a compressor according to one of claims 1 to 10.

12. Shroud (38) according to claim 11, **characterised in that** the blade receiving areas (30; 34) are openings or stumps.

13. Shroud (38) according to one of claims 11 or 12, **characterised in that** it comprises a casing of constant thickness which forms the bump (56) and/or the hollow (62).

14. Shroud (38) according to one of claims 11 to 13, **characterised in that** radially opposite the hollows (62) and/or the bumps (56), the shroud comprises a layer of abradable material (40) extending axially along the hollows (62) and/or the bumps (56).

15. Turbomachine (2), in particular an aircraft turbojet engine, comprising a compressor and/or a shroud, **characterised in that** the compressor is in conformity with one of claims 1 to 10, and/or the shroud is in conformity with one of claims 11 to 14, and **in that** it includes a mounting bracket (26), the arcuate row of bumps (56) and/or the arcuate row of hollows (62) being arranged angularly on the side of the mounting bracket (26), the annular surface (42) comprising an angular half free of bumps (56) and hollows (62) between the blades (30 ; 34) which is opposite the mounting bracket (26).
